Europäisches Patentamt

European Patent Office

Office européen des brevets

(11) Publication number: **0 369 738**
**A2**

(12) **EUROPEAN PATENT APPLICATION**

(21) Application number: **89311767.1**

(22) Date of filing: **14.11.89**

(51) Int. Cl.⁵: **G05D 7/03**

(30) Priority: **18.11.88 GB 8826993**

(43) Date of publication of application:
**23.05.90 Bulletin 90/21**

(84) Designated Contracting States:
**AT BE CH DE ES FR GB GR IT LI LU NL SE**

(71) Applicant: **PRO-AQUA SYSTEMS LIMITED**
**Forest House Sherwood Drive**
**Bletchley Milton Keynes MK3 6EU(GB)**

(72) Inventor: **Arato, Emil Gyorgy**
**51A King Street**
**Kempston Bedfordshire MK42 8BW(GB)**

(74) Representative: **Wain, Christopher Paul et al**
**A.A. THORNTON & CO. Northumberland**
**House 303-306 High Holborn**
**London WC1V 7LE(GB)**

(54) **Modulation system for pressure reducing valves.**

(57) A flow modulator system for a pressure reducing valve includes means to sense changes in flow and actuate the valve in response thereto. A first means (3) to create a first differential pressure is arranged in the flow path downstream of the valve, said first differential pressure being dependent on the flow rate of fluid in the flow path. A bypass tube (6) of smaller cross-sectional area is connected between a location substantially adjacent to a low pressure zone (4) of said first differential pressure creation means (3) and a point (5) between the valve (2) and the first differential pressure creation means (3). The bypass tube (6) is provided with a second means (7) to create a second differential pressure, the pressure at a low pressure zone (8) of said second differential pressure creation means (9) being transmitted to the valve (2) as an indication of the flow rate in the flow path.

FIG. 1

Xerox Copy Centre

## MODULATION SYSTEM FOR PRESSURE REDUCING VALVES

The present invention relates to pressure reducing valves. More particularly it relates to means for sensing automatically such changes in the flow as require a change in the valve setting. Ideally, the change is effected automatically by the sensing means.

The present invention is particularly applicable to the water supply industry, although other uses can be foreseen. In water supply distribution systems, leakage of water from the system may be of the order of 30% or more of all the water supplied. However it is now known that a reduction in the water pressure will reduce the level of leakage, and in fact that for a given reduction in pressure, the reduction in leakage is even greater proportionately.

A reduction in pressure of the water supply will cut down leakage losses, reduce consumption, especially wasteful consumption, and will reduce the frequency of burst pipes. All this will prolong the life of the system and reduce labour costs in repairing the system.

However, there are certain disadvantages inherent in a reduction of pressure. Obviously, the pressure in the system must be sufficiently high for a user remote from the pressure reduction valve to have a reasonable pressure at the point of use. More importantly, the demands on the system may vary greatly. At some time, a majority of the consumers connected to the system may require a supply and the pressure in the system as a whole must be sufficient to supply this need. However, at other times, very few consumers will require the water supply and the pressure could, with adequate safety, be reduced further. Most control valves currently in use provide a constant downstream pressure irrespective of flow rate.

In order to meet this problem of varying demand, there have been developed flow modulated pressure reducing valves, in which the pressure is increased in response to an increased flow, and vice versa.

In some forms of these flow modulated PRVs (pressure reducing valves) the degree of closure of the valve is controlled by means of a diaphragm operated by a pressure differential between a point in the system at which the pressure is determined by the flow rate and another point at which the pressure is normal.

In one system, the pressure differential is created by means of a orifice plate in the flow path, but this system has the disadvantage that the system has a limited modulation range of pressures since the higher the modulation range, the smaller the orifice and this will eventually reduce the effective flow capacity of the pipeline. In other systems, the orifice plate is replaced by a venturi tube. However, whilst this is an improvement, it is still not possible to obtain high modulation ranges without incurring high flow resistance and consequential reduction of the flow of water. This is especially the case where the venturi is located in the optimum sensing position, downstream of the valve.

It is an object of the present invention to provide a flow modulation pressure reducing valve having an improved high modulation range without an undesirable check in the flow of water.

According to the present invention there is provided a flow modulator system for a pressure reducing valve including means to sense changes in flow and actuate the valve in response thereto, said means comprising a first means to create a first differential pressure being dependent on the flow rate of fluid in the flow path, and a bypass tube of smaller cross-sectional area connected between a location substantially adjacent to a low pressure zone of said first differential pressure creation means and a point between the valve and the first differential pressure creation means, said bypass tube being provided with a second means to create a second differential pressure, the pressure at a low pressure zone of said second differential pressure creation means being transmitted to the valve as an indication of the flow rate in the flow path.

At least one of the first and second differential pressure creation means is preferably a venturi tube, or at least one is an orifice plate.

A nozzle, a dall tube, a valve or a bend in the system may replace one or both venturi tubes or orifice plates.

The valve may be automatically operated according to a pressure differential between the low pressure zone at the second differential pressure creation means and a reference control pressure.

The first differential pressure creation means may be configured and dimensioned so as not to limit the flow rate of the water therethrough.

An embodiment of the invention will now be more particularly described by way of example and with reference to the accompanying drawings, in which:

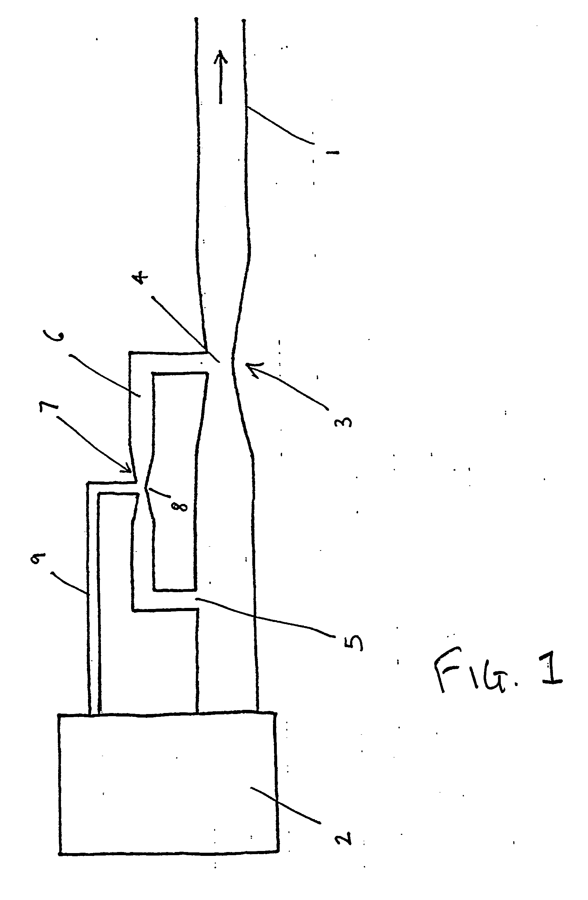

FIGURE 1 shows diagrammatically a system embodying the invention;

FIGURE 2 is an elevation of a compact embodiment of differential pressure creation means including an orifice plate and a venturi tube;

FIGURE 3 is a longitudinal cross-sectional view through the embodiment of Figure 2, taken along the line x-x thereof; and

FIGURE 4 is a scrap view of an alternative inlet arrangement for the venturi tube of Figure 3.

The system is placed in a water main 1 delivering water in the direction of the arrow to a plurality of consumers. Into the system is incorporated a pressure reducing valve 2, which may be any type capable of varying the downstream pressure in such a manner that a constant head of pressure can be maintained at the low pressure zone of the second differential pressure device. The geometry of the second differential pressure device is designed to provide the same pressure at the low pressure zone of the said device as the pressure prevailing at some critical remote point in the water distribution system, over a wide range of flow rates.

Downstream of the PRV 2 is a first venturi tube 3. Connected between the throat 4 of the first venturi tube 3 and a point 5 upstream of the venturi is a bypass tube 6. In this bypass tube 6 is a second venturi 7 and a tube 9 is connected to the throat 8 of the second venturi 7. Tube 9 is connected to the PRV 2 where the pressure in the tube causes actuation of the valve.

In a typical example of such a system where pipe 1 has an internal diameter of 6 inches (152.5 mm), the first venturi 3 has an internal diameter at the throat 4 of 2.5 inches (63.5 mm). In this case, the internal diameter of the throat 8 of the second venturi 7 may be 10 mm. Accordingly, pressure measurements taken at the throat of this second venturi may be used to give a good modulation range to the PRV without the main flow of water being restricted in any way by the first venturi 3.

It is, of course, possible to permit higher gains by adding in a third or even fourth venturi, each connected to the throat of a preceding one.

The by-pass loop containing the second venturi 7 may include a flow control valve which could be adjusted to alter the modulation characteristic of the system as required.

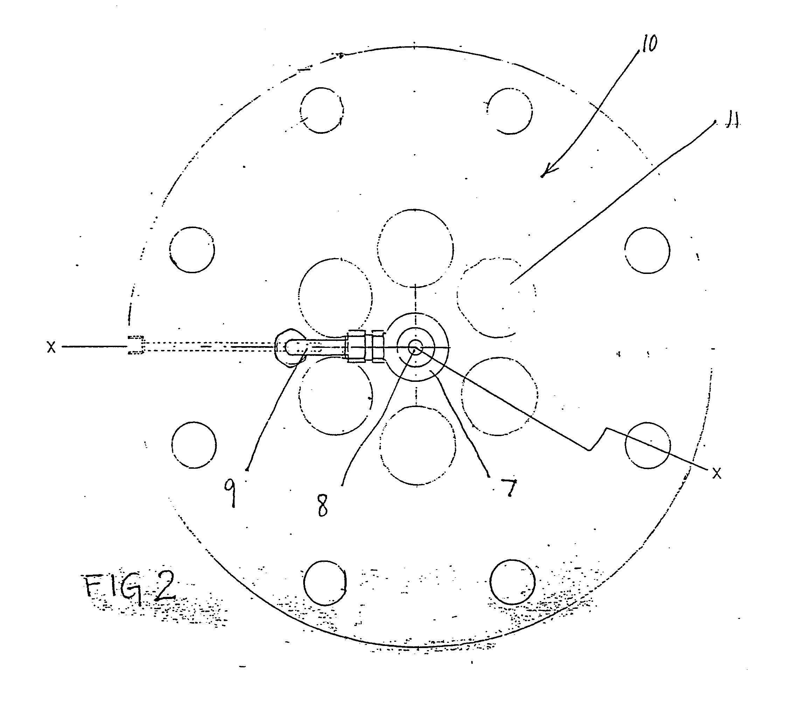

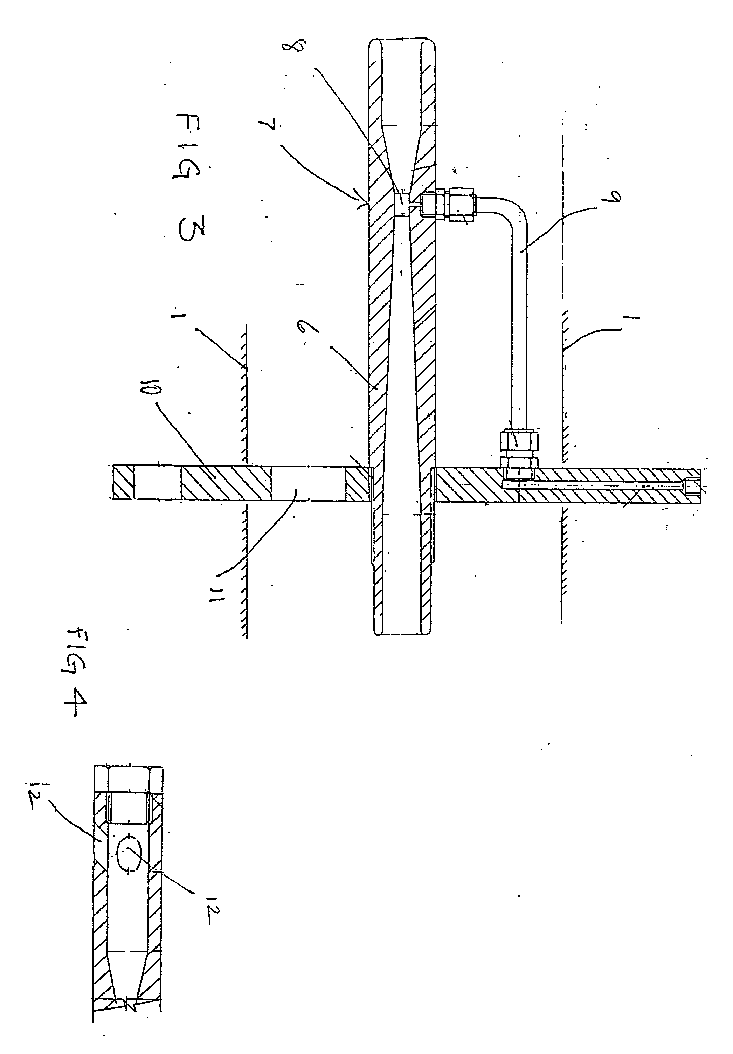

In the embodiment shown in Figures 2 and 3, the first venturi tube 3 is replaced by an orifice plate 10 spanning the pipe 1. The orifice plate 10 has a plurality of circular apertures 11 arranged around a central point.

In the embodiment shown the bypass tube 6 is arranged through the centre of the orifice plate 10 in order to give a more compact arrangement. It may however be located externally of the pipe 1. In either case, it connects across the orifice plate 11 which serves to create a differential pressure between zones upstream and downstream of the plate. The effect of this differential pressure is amplified by the venturi tube 7, and the pressure at the throat thereof is used, via pipe 9, to control the PRV 2. For example the orifice plate may create a pressure differential of 3-4 metres, while the smaller venturi tube may produce 30-40 metres.

Figure 4 shows an alternative form of inlet for the venturi tube 7. As shown, the inlet end is blocked and water enters through a number of angled radial apertures 12.

In the embodiments of both Figure 3 and Figure 4, the venturi tube has preferred angles from the axis at upstream and downstream sides of the throat of 10.5° and 2.5° respectively.

The method of design of a double venturi arrangement together with a worked example is illustrated in the following Example.

EXAMPLE

In this Example, the symbols used are intended to indicate as follows:

h = head of water;
v = flow velocity;
k = loss coefficient;
f = friction factor;
L = length;
d = diameters;
g = gravitational acceleration;
$K_1$ = pipeline loss coefficient;
$K_2$ = main venturi loss coefficient; and
Q = flow rate

Subscripts 1 to 6 refer to points along the system as follows:

1 - inlet to bypass loop;
2 - outlet of bypass loop at the throat of the first venturi;
3 - a point immediately downstream of the first venturi;

4 - a point downstream remote from the system;
5 - a point in the bypass loop immediately upstream of the second venturi; and
6 - the throat of the second venturi.

Other subscripts indicate as follows:

i = inlet
o = outlet
f = friction
t = total
b = bend
v = venturi For the main flow:

$$h_1 - h_2 = \frac{V_2{}^2}{2g} + \frac{V_1{}^2}{2g} \qquad \dots\dots (1)$$

For the by-pass,

$$h_1 - h_2 = K_t \frac{V_5{}^2}{2g} \qquad \dots\dots (2)$$

and $K_t = 2K_f + 2K_b + K_i + K_o + K_n$
but $K_i = 1.0$
$K_o = 1.0$
and $K_f + f\frac{L}{d}$
for a practical by-pass arrangement
$K_n = 0.2$ based on the throat velocity ($V_6$)
From continuity:>
$V_6 = (d_5/d_6)^2 V_5$
$K_f = 0.24$ and $K_b = 0.2$
hence; $2K_f + 2K_b = 0.88$
and $K_t = 2.88 \times (d_5/d_6)^4$ based on

$$\frac{V_5{}^2}{2g}$$

From (1) and (2)

$$\frac{V_5{}^2}{2g} = \frac{V_2{}^2/2g - V_1{}^2/2g}{K_t} = \frac{[(d_1/d_2)^4 - 1]V_1{}^2}{2g(2.88 + 0.2\,(d_5/d_6)^4)} \qquad \dots\dots (3)$$

head at point (5):
$h_1 = h_5 + [2 + (K_f + K_b)/2] V_5{}^2/2g$ (4)
head at point (6) is:
$h_6 = h_5 + V_5{}^2/2g - V_6{}^2/2g$
or $h_6 = h_5 + [1 - (d_5/d_6)^4] V_5{}^2/2g$ (5)
After rearranging, substituting (4) into (5) we get;
$h_6 = h_1 - [1 + (K_f + K_b)/2 + (d_5/d_6)^4] V_5{}^2/2g$ (6)
head at point (4) (ie. at the downstream end of the pipeline) is determined as follows:
$h_1 + V_1{}^2/2g = h_3 + V_1{}^2/2g = K_2 V_2{}^2/2g$
and $h_3 + V_1{}^2/2g = h_4 + V_1{}^2/2g + K_1 V_1{}^2/2g$

Note that; $V_1 = V_3 = V_4$

hence; $h_4 = h_1 - K_2 V_2{}^2/2g - K_1 V_1{}^2/2g$

also, $h_4 = h_1 - (K_2 (d_1/d_2)^4 + K_1) V_1{}^2/2g$     (7)

Since we intend to control the downstream head ($h_4$) by the venturi in the by-pass therefore,

$h_6 = h_4$

Equating equations (6) and (7), and substituting (3) for $V_5{}^2/2g$, we get

$$\frac{[1 + (K_f = K_b)/2 + (d_5/d_6)^4][(d_1/d_2)^4 - 1]}{K_t} = [K_2 (d_1/d_2)^4 + K_1]$$

$$..... (8)$$

Consider Example:

For, $Q = 40 \, 1/sec$

$d_1 = 152.4 \, mm \, (6") - (pipe)$

$d_2 = 63.5 \, mm \, (2.5") - (throat)$

$$K_1 = \frac{20}{V_1{}^2/2g} = 81.63$$

$K_2 = 0.2$

$K_t = 2.88 + 0.2 (d_5/d_6)^4$

also $(K_f + K_b)/2 = 0.44$

From equation (8) $d_5/d_6 = 1.95$

This means that for a 20m head drop in the downstream pipeline and given primary venturi, the secondary venturi diameter for recording the same head (or pressure) as the downstream end of the pipeline is given as:

$d_6 = d_5/1.95$

## Claims

1. A flow modulator system for a pressure reducing valve including differential pressure creation means to sense changes in flow and actuate the valve in response thereto, characterised in that said means comprises a first means (3) to create a first differential pressure arranged in the flow path downstream of the valve (2), said first differential pressure being dependent on the flow rate of fluid in the flow path, and a bypass tube (6) of smaller cross-sectional area connected between a location substantially adjacent to a low pressure zone (4) of said first differential pressure creation means (3) and a point (5) between the valve and the first differential pressure creation means, said bypass tube (6) being provided with a second means (7) to create a second differential pressure, the pressure at a low pressure zone (8) of said second differential pressure creation means (7) being transmitted to the valve (2) as an indication of the flow rate in the flow path.

2. A flow modulator system for a pressure reducing valve as claimed in claim 1, characterised in that at least one of the first and second differential pressure creation means (3,7) is a venturi tube.

3. A flow modulator system for a pressure reducing valve as claimed in either claim 1 or claim 2, characterised in that at least one of the first and second differential pressure creation means (3,7) is an orifice plate.

4. A flow modulator system for a pressure reducing valve as claimed in any one of the preceding claims, characterised in that the valve (2) is automatically operated according to a pressure differential between the pressure at the low pressure zone (8) of the second differential pressure creation means (7) and a reference pressure.

5. A flow modulator system for a pressure reducing valve as claimed in claim 4, characterised in that the pressure at the low pressure zone of the second differential pressure device corresponds substantially to a critical pressure at a remote point in a distribution system supplied through said pressure reducing valve.

6. A flow modulator system for a pressure reducing valve as claimed in any one of the preceding claims, characterised in that the first differential pressure creation means (3) is configured and dimensioned so as not to limit substantially the flow rate of the water therethrough.

7. A flow modulator system to detect changes in flow, characterised in that it comprises a first means to create a first differential pressure in the flow path, said first differential pressure giving a signal outside the range of accurate measurement of a detecting instrument, and means to create a second differential pressure arranged between a low pressure zone of said first differential pressure creation means and a reference pressure and adapted to amplify said signal to give a second signal within an accurate range of measurement of a detecting instrument.

8. A fluid supply system comprising a pressure reducing valve (2), characterised in that the valve is controlled by a flow modulator system as claimed in any one of the preceding claims.

Fig. 1

EP 0 369 738 A2

FIG 2

EP 0 369 738 A2

FIG 4

FIG 3